(19)

**Europäisches Patentamt**
**European Patent Office**
**Office européen des brevets**

(11) **EP 4 092 890 A1**

(12) **EUROPEAN PATENT APPLICATION**

(43) Date of publication:
**23.11.2022  Bulletin 2022/47**

(21) Application number: **21305661.7**

(22) Date of filing: **20.05.2021**

(51) International Patent Classification (IPC):
*H02M 1/00* (2006.01)     *H02M 1/40* (2007.01)
*H02M 3/00* (2006.01)     *H02M 3/158* (2006.01)
*H02M 3/335* (2006.01)     *H02M 1/32* (2007.01)

(52) Cooperative Patent Classification (CPC):
**H02M 1/40; H02M 1/007; H02M 3/01; H02M 3/158;**
**H02M 3/33573;** H02M 1/0022; H02M 1/32;
H02M 3/33584

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Mitsubishi Electric R & D Centre Europe B.V.**
  **1119 NS Schiphol Rijk (NL)**
  Designated Contracting States:
  **FR**
• **Mitsubishi Electric Corporation**
  **Tokyo 100-8310 (JP)**
  Designated Contracting States:
  **AL AT BE BG CH CY CZ DE DK EE ES FI GB GR**
  **HR HU IE IS IT LI LT LU LV MC MK MT NL NO PL**
  **PT RO RS SE SI SK SM TR**

(72) Inventors:
• **REGNAT, Guillaume**
  **35708 RENNES (FR)**
• **LEFEVRE, Guillaume**
  **35708 RENNES (FR)**

(74) Representative: **Cabinet Le Guen Maillet**
  **3, impasse de la Vigie**
  **CS 71840**
  **35418 Saint-Malo Cedex (FR)**

(54)     **A METHOD AND A SYSTEM FOR CONTROLLING AN ISOLATED RESONANT CONVERTER**

(57)     The present invention concerns a system for controlling an isolated resonant converter, the isolated resonant converter (100) comprising a bridge converter (110), a transformer (120) and a rectifier module (130). The system comprises an input voltage measurement module (140) and a frequency control module (150) that provides control signals that control the switches of the bridge converter, wherein frequency control module comprises means for comparing the measured input voltage to a predetermined voltage and means for increasing the frequency of the control signals only if the measured input voltage is upper than the predetermined voltage.

Fig. 1

EP 4 092 890 A1

## Description

TECHNICAL FIELD

The present invention relates generally to a method and a system for controlling an isolated resonant converter.

RELATED ART

Isolated resonant converter is widely used in industry for application where high efficiency and high power density are required. In an isolated resonant converter, a switch network generates a square voltage waveform from an input DC source which excites a resonant tank. The rectifier network receives the generated waveform from the resonant tank and rectifies it into a DC output.

One of the advantages of the resonant tank is to adjust the gain depending on the switching frequency. In classical regulation mode, the switching frequency is adjusted to increase or decrease the voltage gain around the value one and thus allows to regulate the output voltage or output current. Load change makes varying the voltage gain curve as the resonance frequency of the resonant tank.

In the case of application where wide input or output voltage range is required, for example chargers for automotive application where high voltage battery is varying between, the performances of a resonant converter with conventional frequency control are degraded and do not lead to high efficiency and/or high power density design.

To overcome the issue, a dual-stage converter architecture is commonly proposed. The dual-stage architecture is made of an isolated resonant converter connected in series with a non-isolated converter. An intermediate DC bus voltage is generated in between both converters. The isolated resonant converter is working without any frequency regulation at a frequency equal to the resonance frequency. With this configuration, the isolated resonant converter acts as a "DC transformer" where the output voltage of the isolated resonant converter equals the input voltage multiplied by the gain of the transformer, but also taking into account capacitive half bridges on both sides. The isolated resonant converter is named herein after a DCX isolated resonant DC/DC converter. The regulated non-isolated DC/DC converter can be a topology performing Step-down, Step-up or both features. A closed loop pulse width modulation control is applied to this converter to control the output voltage or the output current.

A high frequency transformer is designed in order to avoid the saturation of the magnetic material. Each magnetic material has a saturation field. In many applications, the input voltage of a converter system may be subjected to transient events like overvoltage or undervoltage. For example, an aerospace standard for electrical network requires that the 270V DC bus can support overvoltage up to 400V for 30ms.

The resonant converter should withstand this transient without any alteration of its operational features. This can be ensured by using the peak voltage of the transient case as the reference voltage to ensure that the saturation field is lower than the maximum saturation field even during transient. However, this leads to oversize the transformer magnetic core and thus a bulky and heavier transformer is obtained.

SUMMARY OF THE INVENTION

The present invention aims to provide a method and a system for controlling an isolated resonant converter.

To that end, the present invention concerns a system for controlling an isolated resonant converter, the isolated resonant converter comprising a bridge converter, a transformer and a rectifier module, characterized in that the system comprises an input voltage measurement module and a frequency control module that provides control signals that control the switches of the bridge converter, wherein frequency control module comprises means for comparing the measured input voltage to a predetermined voltage and means for increasing the frequency of the control signals only if the measured input voltage is upper than the predetermined voltage.

The present invention concerns also a method for controlling an isolated resonant converter, the isolated resonant converter comprising a bridge converter, a transformer and a rectifier module, characterized in that the method comprises the steps of:

- measuring the voltage at the input of the bridge converter,
- comparing if the value of the measured voltage is upper than a predetermined value,
- increasing the frequency of the control signals only if the measured input voltage is upper than the predetermined voltage.

Thus, the magnetizing current of the transformer is kept constant, avoiding the transformer saturation in case of an input voltage transient event.

According to a particular feature, the frequency of the control signals is increased by setting the value of the frequency of the control signals to a value upper than the frequency of the control signals only when the measured input voltage is upper than the predetermined voltage.

Thus, the magnetizing current of the transformer is kept constant, avoiding the transformer saturation in case of an input voltage transient event.

According to a particular feature, the frequency of the control signals is increased by determining the value of the frequency of the control signals according to the value of the measured input voltage only when the measured input voltage is upper than the predetermined voltage.

Thus, the control scheme can handle various levels of input voltage transient events.

According to a particular feature, the isolated resonant converter is included in a dual-stage converter that further comprises a pulse width regulated non isolated resonant DC/DC.

Thus, the isolated resonant DC/DC converter is working as a "DC transformer" (DCX) leading to high efficiency and high power density converter.

According to a particular feature, the pulse width modulated regulated non isolated resonant DC/DC converter is followed by the isolated resonant converter.

Thus, the isolated resonant DC/DC is placed in back end and optimized for this configuration.

According to a particular feature, the isolated resonant converter is followed by the pulse width modulated regulated non isolated resonant DC/DC.

Thus, the isolated resonant DC/DC is placed in front end and optimized for this configuration.

According to a particular feature, the pulse width modulated regulated non isolated resonant DC/DC comprises switches that are controlled by signals the duty cycle of which is dependent of the output voltage of the dual-stage converter.

Thus, any small variations on current or voltage caused by the frequency control of the DCX isolated resonant DC/DC converter can be compensated by the regulated non isolated DC/DC converter.

BRIEF DESCRIPTION OF THE DRAWINGS

The characteristics of the invention will emerge more clearly from a reading of the following description of example embodiments, the said description being produced with reference to the accompanying drawings, among which:

Fig. 1 represents a first example of a system for controlling the saturation field of a transformer of a converter composed of a DCX isolated resonant DC/DC converter;

Fig. 2 represents a second example of a system for controlling the saturation field of a transformer of a converter composed of a DCX isolated resonant DC/DC converter followed by a pulse width modulated regulated non isolated resonant DC/DC converter according to the invention;

Fig. 3 represents a second example of a system for controlling the saturation field of a transformer of a converter composed of a pulse width modulated regulated non isolated resonant DC/DC converter followed by a DCX isolated resonant DC/DC converter according to the invention;

Fig. 4 represents the pulse width modulated regulated non isolated resonant DC/DC converter of the second example of realization;

Fig. 5 represents the pulse width modulated regulated non isolated resonant DC/DC converter of the third example of realization;

Fig. 6 represents an example of architecture of a frequency control module according to the present invention;

Fig. 7 represents an example of an algorithm executed by the frequency control module according to the present invention;

Fig. 8 represents an example of signals in the third example of realization of the system for controlling the saturation field of a transformer;

Fig. 9 is an enlarged view of the magnetizing current when the input voltage is below a predetermined threshold;

Fig. 10 is an enlarged view of the magnetizing current when the input voltage is upper than the predetermined threshold;

Fig. 11 represents an example of signals that drive the switches S1 to S4 of the DCX isolated resonant DC/DC converter when the input voltage is below a predetermined threshold;

Fig. 12 represents an example of signals that drive the switches S1 to S4 of the DCX isolated resonant DC/DC converter when the input voltage is upper than predetermined threshold;

Fig. 13 represents an example of signals that drive the switches of the rectifier module of the DCX isolated resonant DC/DC converter.

DESCRIPTION

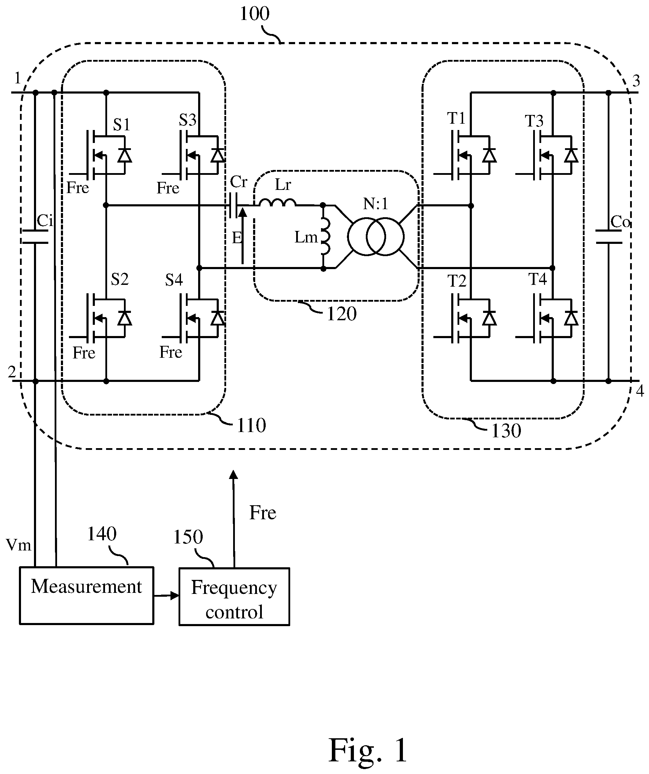

**Fig. 1** represents a first example of a system for controlling the saturation field of a transformer of a converter composed of a DCX isolated resonant DC/DC converter 100.

The system for controlling the saturation field of a transformer is composed of a DCX isolated resonant DC/DC converter 100, an input voltage measurement module 140 and a frequency control module 150.

The DCX isolated resonant DC/DC converter 100 has four terminals noted 1, 2, 3 and 4 and is composed of a bridge converter 110, a transformer 120 and a rectifier module 130.

In the example of Fig. 1, the bridge converter is a full bridge converter. The present application is also applicable when the bridge converter 110 is a half bridge converter.

The full bridge converter 110 is composed of four switches S1, S2, S3 and S4 and of an input capacitor Ci.

A first terminal of the capacitor Ci is connected to the terminal 1 and to the first terminals of the switches S1 and S3.

A second terminal of the capacitor Ci is connected to the terminal 2 and to the first terminals of the switches S2 and S4.

A second terminal of the switch S 1 is connected to a second terminal of the switch S2 and to a first terminal of a capacitor Cr. The second terminal of the capacitor Cr is connected to a first primary terminal of the transformer 120.

A second terminal of the switch S3 is connected to a second terminal of the switch S4 and to a second primary terminal of the transformer 120.

The rectifier module 130 is composed of four switches T1, T2, T3 and T4 and of a capacitor Co.

The first terminals of the switches T1 and T2 are connected to a first secondary terminal of the transformer 120.

The first terminals of the switches T3 and T4 are connected to a second secondary terminal of the transformer 120.

A second terminal of the switch T1 is connected to a second terminal of the switch T3, to a first terminal of the capacitor Co and to the terminal 3.

A second terminal of the switch T2 is connected to a second terminal of the switch T4, to a second terminal of the capacitor Co and to the terminal 4.

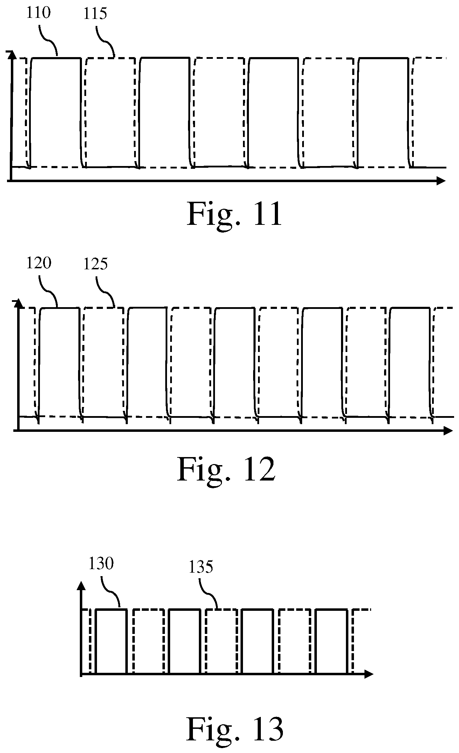

The switches S1 to S4 are controlled by a signal Fre provided by the frequency control module 150. More precisely, the switches S1 and S4 are controlled by the signal Fre and the switches S2 and S3 are controlled by the signal Fre phase shifted of 180 degrees. Examples of the signals that control the switches S1 to S4 are given in Figs. 11 and 12.

The voltage signal value Vm at the input of the full bridge converter 100 is measured by a measurement module 140.

The measured voltage value Vm is provided to a frequency control module 150.

The frequency control module 150 determines from the measured voltage value Vm the frequency of the signal Fre applied to the switches S1 and S4.

If the measured voltage is below a predetermined voltage, the frequency control module 150 determines the frequency of the signal Fre taking into account the following formula:

$$F_{sw} = \frac{K_E.E}{N_{pri}.A_E.B_{max}},$$

Where $K_E$ is a coefficient depending on voltage waveform at the input of the transformer, for example equal to ¼ for a square voltage waveform, E is the peak voltage on the primary of the transformer 120 that is equal to the voltage Vm, $N_{pri}$ is the primary side transformer turns number, $B_{max}$ is the maximum magnetic field of the transformer 120 and $A_E$ is the area of the magnetic core.

For example, if the nominal input voltage is between 440 and 640 Volts, the predetermined voltage is equal to 640 Volts and the frequency of the signal Fre when the voltage Vm is below the predetermined voltage is equal to 400kHz with a duty cycle of 50%.

For example, if the nominal input voltage is between 440 and 640 Volts, the frequency of the signal Fre when the voltage Vm is upper than the predetermined voltage, i.e. when transient occurs, is equal to 500kHz with a duty cycle of 50%.

The switches T1 to T4 are controlled in order to provide a rectified signal.

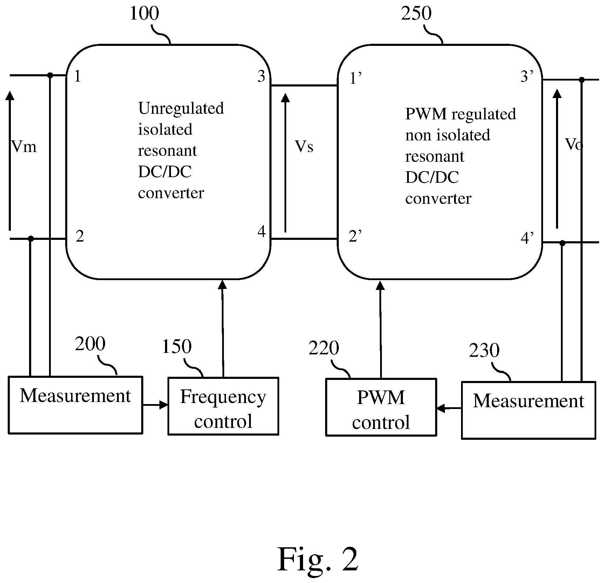

**Fig. 2** represents a second example of a system for controlling the saturation field of a transformer of a converter composed of a DCX isolated resonant DC/DC converter converter followed by a pulse width modulated regulated non isolated resonant DC/DC converter according to the invention.

The system for controlling the saturation field of a transformer is composed of DCX isolated resonant DC/DC converter 100, a regulated non isolated resonant DC converter 250, an input voltage measurement module 240, a frequency control module 150, an output voltage measurement module 230 and a pulse width modulation module 220.

The DCX isolated resonant DC/DC converter 100 is identical as the one disclosed in reference to Fig. 1.

An input DC signal is provided between the terminals 1 and 2 of the DCX isolated resonant DC/DC converter 100.

The terminals 3 and 4 of the DCX isolated resonant DC/DC converter 100 are provided respectively to a first and second input terminals, noted 1' and 2' of the regulated non isolated resonant DC converter 250.

The regulated non isolated resonant DC converter 250 comprises two output terminals noted 3' and 4' that provide an output signal Vo.

The voltage signal value Vm at the input of the DCX isolated resonant DC/DC converter 100 is measured by the measurement module 200.

The measured voltage value Vm is provided to the frequency control module 150.

The frequency control module 150 determines from the measured voltage value Vm, the frequency of the signal Fre applied to the switches S1 and S4.

If the measured voltage is below a predetermined voltage, the frequency control module 150 determines the frequency of the signal Fre taking into account the following formula:

$$F_{sw} = \frac{K_E.E}{N_{pri}.A_E.B_{max}},$$

Where $K_E$ is a coefficient depending on voltage waveform at the input of the transformer, for example equal to ¼ for a square voltage waveform, E is the peak voltage on the primary of the transformer 120 that is equal to the voltage Vm, $N_{pri}$ is the primary side transformer turns number, $B_{max}$ is the maximum magnetic field of the transformer 120 and $A_E$ is the area of the magnetic core.

For example, if the nominal input voltage is between 440 and 640 Volts, the predetermined voltage is equal to 640 Volts and the frequency of the signal Fre when the voltage Vm is below the predetermined voltage is equal to 400kHz with a duty cycle of 50%.

For example, if the nominal input voltage is between 440 and 640 Volts, the frequency of the signal Fre when the voltage Vm is upper than the predetermined voltage, i.e. when transient occurs, is equal to 500kHz with a duty cycle of 50%.

The output voltage measurement module 230 measures the voltage at the output of the regulated non isolated resonant DC converter 250 and the measured signal Vo value is provided to the Pulse Width Modulation module 220 that adjusts the duty cycle of the signals that control the switches of the pulse width modulated regulated non isolated resonant DC/DC converter according to the measured voltage Vo.

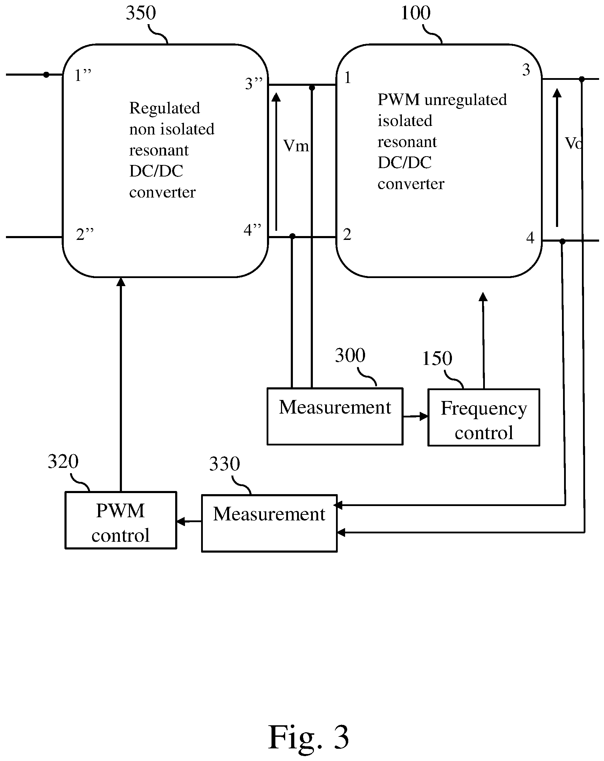

**Fig. 3** represents a second example of a system for controlling the saturation field of a transformer of a converter composed of a pulse width modulated regulated non isolated resonant DC/DC converter followed by a DCX isolated resonant DC/DC converter according to the invention.

The system for controlling the saturation field of a transformer is composed of DCX isolated resonant DC/DC converter 100, a pulse width modulated regulated non isolated resonant DC converter 350, an input voltage measurement module 300, a frequency control module 150, an output voltage measurement module 320 and a pulse width modulation module 320.

The DCX isolated resonant DC/DC converter 100 is identical as the one disclosed in reference to Fig. 1.

An input DC signal is provided between the terminals 1" and 2" of the pulse width modulated regulated non isolated resonant DC converter 350.

The output terminals 3" and 4" of the pulse width modulated regulated non isolated resonant DC converter 350 are connected to the input terminals 1 and 2 of the DCX isolated resonant DC/DC converter 100 and provide the signal Vm to the DCX isolated resonant DC/DC converter 100.

The voltage signal value Vm at the input of the DCX isolated resonant DC/DC converter 100 is measured by the measurement module 300.

The measured voltage value Vm is provided to the frequency control module 150.

The frequency control module 150 determines from the measured voltage value Vm, the frequency of the signal Fre applied to the switches S1 and S4.

If the measured voltage is below a predetermined voltage, the frequency control module 150 determines the frequency of the signal Fre taking into account the following formula:

$$F_{sw} = \frac{K_E.E}{N_{pri}.A_E.B_{max}},$$

Where $K_E$ is a coefficient depending on voltage waveform at the input of the transformer, for example equal to ¼ for a square voltage waveform, E is the peak voltage on the primary of the transformer 120 that is equal to the voltage Vm, $N_{pri}$ is the primary side transformer turns number, $B_{max}$ is the maximum magnetic field of the transformer 120 and $A_E$ is the area of the magnetic core.

For example, if the nominal input voltage is between 440 and 640 Volts, the predetermined voltage is equal to 640 Volts and the frequency of the signal Fre when the voltage Vm is below the predetermined voltage is equal to 400kHz with a duty cycle of 50%.

For example, if the nominal input voltage is between 440 and 640 Volts, the frequency of the signal Fre when the voltage Vm is upper than the predetermined voltage, i.e. when transient occurs, is equal to 500kHz with a duty cycle of 50%.

The output voltage measurement module 330 measures the voltage at the output of the DCX isolated resonant DC/DC converter 100 and the measured signal Vo value is provided to the Pulse Width Modulation module 320 that adjusts the duty cycle of the signals that control the switches of the pulse width modulated regulated non isolated resonant DC/DC converter according to the measured voltage Vo.

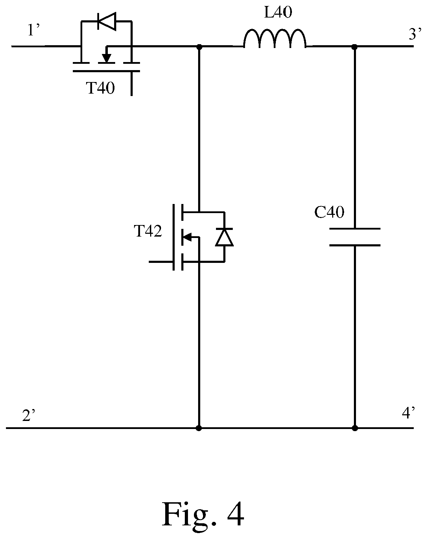

**Fig. 4** represents the pulse width modulated regulated non isolated resonant DC/DC converter of the second example of realization.

The pulse width modulated regulated non isolated resonant DC/DC converter 250 comprises two switches T40, T42, one inductor L40 and a capacitor C40.

A first terminal of the switch T40 is connected to the input 1' of the pulse width modulated regulated non isolated resonant DC/DC converter 250.

A first terminal of the switch T42 is connected to the input 2', the output 4' of the pulse width modulated regulated non isolated resonant DC/DC converter 250 and to a first terminal of the capacitor C40.

A second terminal of the switch T40 is connected to a first terminal of the inductor L40 and to a second terminal of the switch T42.

A second terminal of the inductor L40 is connected to a second terminal of the capacitor C40 and to the output 3' of the pulse width modulated regulated non isolated resonant DC/DC converter 250.

The switches T40 and T42 are controlled respectively by the PWM module 220 with a phase difference of 180 degrees, the duty cycle of the signals being determined according to the measured output voltage Vo.

It has to be noted here that the frequency of the pulse width modulated signals may be different from the frequency of the signal provided by the frequency control module 150.

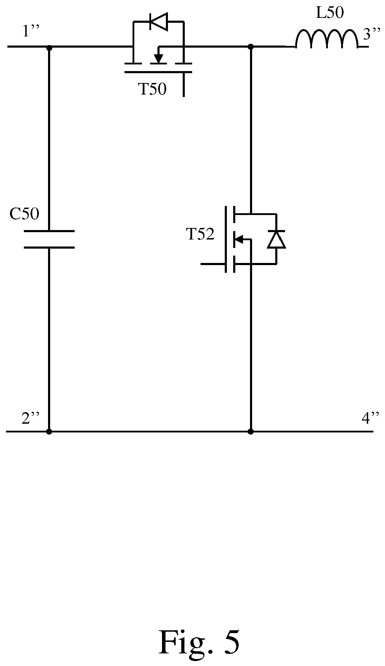

**Fig. 5** represents the pulse width modulated regulated non isolated resonant DC/DC converter of the third example of realization.

The pulse width modulated regulated non isolated resonant DC/DC converter 250 comprises two switches T50, T52, one inductor L50 and a capacitor C50.

A first terminal of the switch T50 is connected to the input 1" of the pulse width modulated regulated non isolated resonant DC/DC converter 350 and to a first terminal of the capacitor C50.

A first terminal of the switch T52 is connected to the input 2", the output 4' of the pulse width modulated regulated non isolated resonant DC/DC converter 350 and to a second terminal of the capacitor C50.

A second terminal of the switch T50 is connected to a first terminal of the inductor L40 and to a second terminal of the switch T52.

A second terminal of the inductor L40 is connected to the output 3" of the pulse width modulated regulated non isolated resonant DC/DC converter 350.

The switches T50 and T52 are controlled respectively by the PWM module 320 with a phase difference of 180 degrees, the duty cycle of the signals being determined according to the measured output voltage Vo.

It has to be noted here that the frequency of the pulse width modulated signals may be different from the frequency of the signal provided by the frequency control module 150.

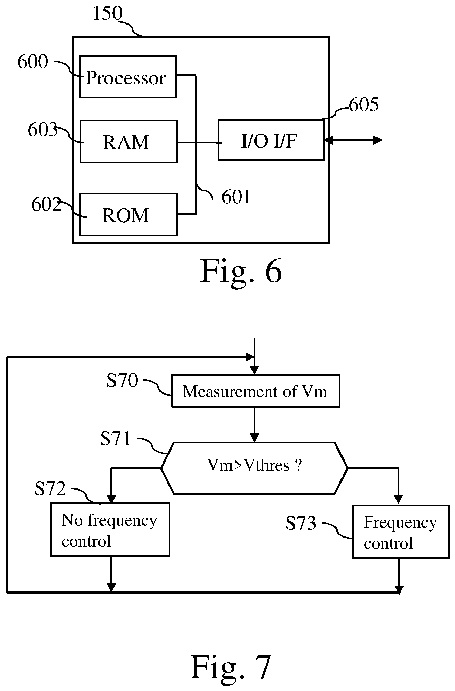

**Fig. 6** represents an example of architecture of a frequency control module according to the present invention.

The frequency control module 150 has, for example, an architecture based on components connected by a bus 601 and a processor 600 controlled by a program as disclosed in Fig. 7.

The bus 601 links the processor 600 to a read only memory ROM 602, a random access memory RAM 603, an input output I/O IF interface 605.

The input output I/O IF interface 605 enables the frequency control module 150 to receive the measured voltage Vm and to provide the signals Fre to unregulated isolated resonant DC/DC converter 100.

The memory 603 contains registers intended to receive variables and the instructions of the program related to the algorithm as disclosed in Fig. 7.

The read-only memory, or possibly a Flash memory 602, contains instructions of the programs related to the algorithm as disclosed in Fig. 7, when the frequency control module 150 is powered on, that are loaded to the random access memory 603. Alternatively, the program may also be executed directly from the ROM memory 602.

The calculation performed by the frequency control module 150 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the frequency control module 150 includes circuitry, or a device including circuitry, causing the frequency control module 150 to perform the program related to the algorithm as disclosed in Fig. 7.

In a variant, the frequency control module 150 may be implemented into a voltage controlled oscillator.

**Fig. 7** represents an example of an algorithm executed by the frequency control module according to the present invention.

The present algorithm is disclosed in an example wherein it is executed by the processor 600 of the frequency control module 150.

At step S70, the processor detects the reception of a measured voltage value Vm.

At step S71, the processor 600 checks if the measured voltage value Vm is upper than the predetermined value.

If the measured voltage value Vm is upper than the predetermined value, the processor 600 moves to step S73. Otherwise, the processor 600 moves to step S72.

At step S72, the processor 600 sets the frequency of the signal Fre to 400kHz with a duty cycle of 50% and returns to step S70.

At step S73, the processor 600 sets the frequency of the signal Fre to 500kHz with a duty cycle of 50% and returns to step S70.

In a variant, the frequency of the signal Fre when the measured voltage value Vm is upper than the predetermined value is a first degree linear function of the input voltage. For example, the first degree linear function is Fre= 625*Vm.

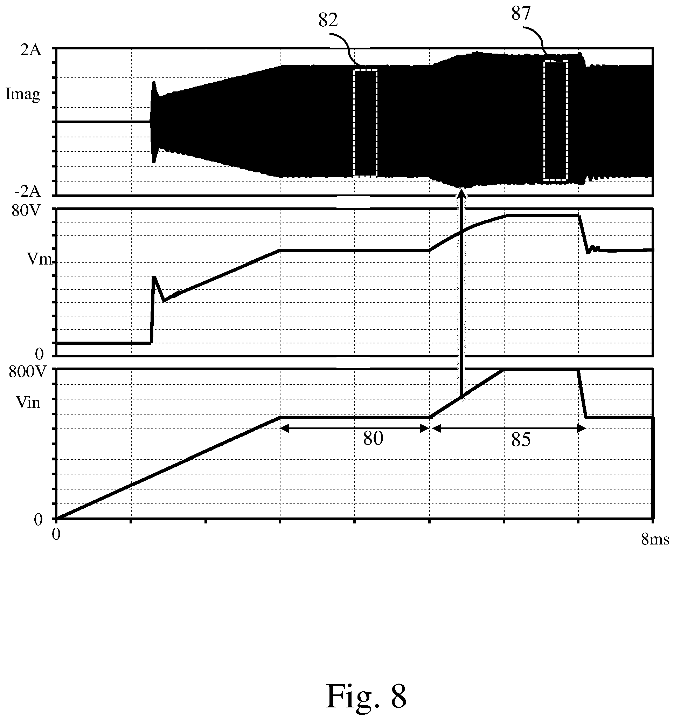

**Fig. 8** represents an example of signals in the third example of realization of the system for controlling the saturation field of a transformer.

The Fig. 8 represents the magnetizing current that flows into the primary of the transformer 120, the voltage Vin at the input of the pulse width modulated regulated non isolated resonant DC/DC converter 350 and the voltage Vm at the input of the unregulated isolated resonant DC/DC converter 100.

The horizontal axis represents the time.

During the time period noted 80, the voltage Vin is at steady state, for example 540 Volts peak in Fig. 8.

During the time period noted 85, a transient occurs on the input voltage Vin and the input voltage reaches 800 Volts peak in the example of Fig. 8.

The frequency of the signal Fre is modified when the input voltage Vin reaches the value of 540 Volts peak.

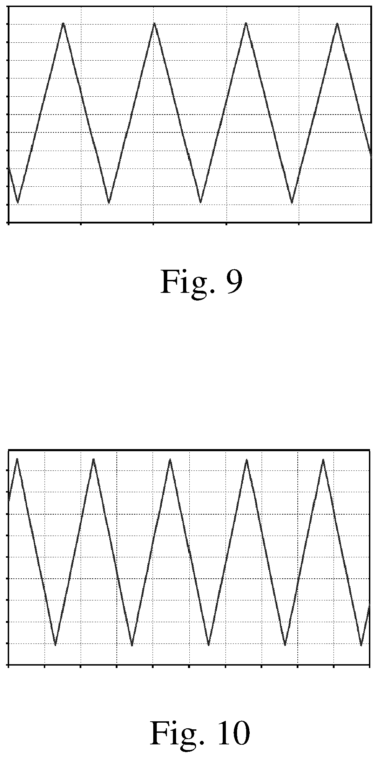

**Fig. 9** is an enlarged view of the magnetizing current when the input voltage is below a predetermined threshold.

The Fig. 9 is an enlarged view of the magnetizing current in the time period 80.

The frequency of the magnetizing current is in the example of Fig. 9 equal to 400kHz.

**Fig. 10** is an enlarged view of the magnetizing current when the input voltage is upper than the predetermined threshold.

The Fig. 10 is an enlarged view of the magnetizing current in the time period 85.

The frequency of the magnetizing current is in the example of Fig. 10 equal to 500 kHz.

**Fig. 11** represents an example of signals that drive the switches S1 to S4 of the DCX isolated resonant DC/DC converter when the input voltage is below a predetermined threshold.

The frequency of the signal Fre is in the example of Fig. 11 equal to 400kHz.

The signal noted 110 corresponds to the signal that controls the switches S1 and S4 and the signal noted 115 corresponds to the signal that controls the switches S2 and S3.

**Fig. 12** represents an example of signals that drive the switches S1 to S4 of the DCX isolated resonant DC/DC converter when the input voltage is upper than predetermined threshold.

The frequency of the signal Fre is in the example of Fig. 12 equal to 500kHz.

The signal noted 120 corresponds to the signal that controls the switches S1 and S4 and the signal noted 125 corresponds to the signal that controls the switches S2 and S3.

**Fig. 13** represents an example of signals that drive the switches of the rectifier module of the DCX isolated resonant DC/DC converter.

The signal noted 130 corresponds to the signal that controls the switches T1 and T4 and the signal noted 135 corresponds to the signal that controls the switches T2 and T3.

The frequency of the signals 130 and 135 is dependent of the frequency of the signal Fre.

Naturally, many modifications can be made to the embodiments of the invention described above without departing from the scope of the present invention.

**Claims**

1. A system for controlling an isolated resonant converter, the isolated resonant converter (100) comprising a bridge converter (110), a transformer (120) and a rectifier module (130), **characterized in that** the system comprises an input voltage measurement module (140) and a frequency control module (150) that provides control signals that control the switches of the bridge converter, wherein frequency control module comprises means for comparing the measured input voltage to a predetermined voltage and means for increasing the frequency of the control signals only if the measured input voltage is upper than the predetermined voltage.

2. The system according to claim 1, **characterized in that** the frequency of the control signals is increased by setting the value of the frequency of the control signals to a value upper than the frequency of the control signals only when the measured input voltage is upper than the predetermined voltage.

3. The system according to claim 1, **characterized in that** the frequency of the control signals is increased by determining the value of the frequency of the control signals according to the value of the measured input voltage only when the measured input voltage is upper than the predetermined voltage.

4. The system according to any of the preceding claims, **characterized in that** the isolated resonant converter is included in a dual-stage converter that further comprises a pulse width modulated regulated non isolated resonant DC/DC.

5. The system according to claim 4, **characterized in that** the pulse width modulated regulated non isolated resonant DC/DC converter is followed by the isolated resonant converter (100).

6. The system according to claim 4, **characterized in that** the isolated resonant converter (100) is followed by the regulated non isolated resonant DC/DC.

7. The system according to any of the claims 4 to 6, **characterized in that** the pulse width modulated regulated non isolated resonant DC/DC comprises switches that are controlled by signals the duty cycle of which is dependent of the output voltage of the dual-stage converter.

8. A method for controlling an isolated resonant converter, the isolated resonant converter comprising a bridge converter (110), a transformer (120) and a rectifier module (130), **characterized in that** the method comprises the steps of:

    - measuring the voltage at the input of the bridge converter,
    - comparing if the value of the measured voltage is upper than a predetermined value,
    - increasing the frequency of the control signals only if the measured input voltage is upper than the predetermined voltage.

Fig. 1

100                              250

| 1                    Unregulated        3 | | 1'              PWM regulated        3' |
isolated                                                  non isolated
resonant                                                  resonant
Vm                DC/DC          Vs                    DC/DC          Vc
converter                                                converter

| 2                                       4 | | 2'                                     4' |

200        150                          220            230

Measurement → Frequency        PWM ← Measurement
                control        control

Fig. 2

350

100

Fig. 3

Fig. 4

Fig. 5

150

600

Processor

603

RAM

602

ROM

601

I/O I/F

605

## Fig. 6

S70 — Measurement of Vm

S71 — Vm>Vthres ?

S72 — No frequency control

S73 — Frequency control

## Fig. 7

Fig. 8

Fig. 9

Fig. 10

110 115

## Fig. 11

120 125

## Fig. 12

130 135

## Fig. 13

Europäisches
Patentamt

European
Patent Office

Office européen
des brevets

# EUROPEAN SEARCH REPORT

**Application Number**

EP 21 30 5661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/336017 A1 (UNO YOSHIYUKI [JP] ET AL) 19 December 2013 (2013-12-19) * paragraph [0074] - paragraph [0078] * * paragraph [0080] * * figure 7 * | 1-8 | INV. H02M1/00 H02M1/40 H02M3/00 H02M3/158 H02M3/335 H02M1/32 |
| X | EP 3 098 956 A1 (HITACHI LTD [JP]) 30 November 2016 (2016-11-30) * paragraph [0025] * * figures 3,5 * | 1-8 | |
| X | YANG B ET AL: "Over current protection methods for LLC resonant converter", EIGHTEENTH ANNUAL IEEE APPLIED POWER ELECTRONICS CONFERENCE AND EXPOSITION, 2003. APEC '03; [ANNUAL APPLIED POWER ELECTRONICS CONFERENCE], NEW YORK, NY : IEEE, US, 9 February 2003 (2003-02-09), pages 605-609vol.2, XP032155960, DOI: 10.1109/APEC.2003.1179276 ISBN: 978-0-7803-7768-4 * abstract * * page 606 - page 607 * * figure 1 * | 1-8 | |
| A | Hewitson Leslie ET AL: "Transformer protection" In: "Practical Power System Protection", 11 December 2004 (2004-12-11), Elsevier Science & Technology, The Netherlands, XP055850782, ISBN: 978-0-08-045598-3 page 209, * the whole document * | 1-8 | TECHNICAL FIELDS SEARCHED (IPC) H02M |

The present search report has been drawn up for all claims

| Place of search | Date of completion of the search | Examiner |
|---|---|---|
| The Hague | 13 October 2021 | Lochhead, Steven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 30 5661

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2021

| Patent document cited in search report | | Publication date | Patent family member(s) | | Publication date |
|---|---|---|---|---|---|
| US 2013336017 | A1 | 19-12-2013 | CN 103516196 A | | 15-01-2014 |
| | | | JP 5704124 B2 | | 22-04-2015 |
| | | | JP 2013258860 A | | 26-12-2013 |
| | | | US 2013336017 A1 | | 19-12-2013 |
| EP 3098956 | A1 | 30-11-2016 | EP 3098956 A1 | | 30-11-2016 |
| | | | JP 6496608 B2 | | 03-04-2019 |
| | | | JP 2016220480 A | | 22-12-2016 |
| | | | US 2016352229 A1 | | 01-12-2016 |

EPO FORM P0459

For more details about this annex : see Official Journal of the European Patent Office, No. 12/82